# EUROPEAN PATENT APPLICATION

(11) **EP 4 542 023 A1**
(43) Date of publication of application: **23.04.2025**
(21) Application number: 24207598.4
(22) Date of filing: 18.10.2024
(51) Int. Cl.: F02M 35/10

(54) **AIR INTAKE DEVICE FOR THE ENGINE OF A VEHICLE OR TRANSPORTATION EQUIPMENT**

(30) Priority: 20.10.2023 US 202363591808 P
(71) Applicant: Carrier Corporation, Palm Beach Gardens, FL 33418 (US)
(72) Inventor: LI, Huijun, East Syracuse, NY 13057 (US); DYGERT, Ryan, East Syracuse, NY 13057 (US); CALL, Herbert, East Syracuse, NY 13057 (US); BANTA, George, East Syracuse, NY 13057 (US); BUSHNELL, Peter, East Syracuse, NY 13057 (US)
(74) Representative: Dehns

(57) **Abstract**

Described herein is an air intake device (100) for an engine of a vehicle equipped with a transport refrigeration unit (TRU). The device comprises a housing (102) defining a shape of the device (100). The device (100) is adapted to be fixedly or removably configured at a predetermined position in the vehicle, the TRU, a container or chassis associated with the vehicle, or a trailer associated with the vehicle such that the device (100) facilitates inflow of ambient air therewithin and directs the ambient air towards the engine.

## Description

This invention relates to the field of air intake devices, and more particularly, an air intake device for an engine of a vehicle or transportation equipment equipped with a transport refrigeration unit (TRU).

According to a first aspect of the invention there is provided an air intake device for an engine of a vehicle equipped with a transport refrigeration unit (TRU). The device comprises a housing defining a shape of the device. The device is adapted to be fixedly or removably configured at a predetermined position in the vehicle, the TRU, a container or chassis associated with the vehicle, or a trailer associated with the vehicle such that the device facilitates inflow of ambient air therewithin and directs the ambient air towards the engine.

Optionally, the housing comprises an inlet in communication with ambient, a first outlet, and an internal cavity enclosed by the housing such that the internal cavity fluidically connects the inlet to the first outlet of the housing.

Optionally, the device is configured with the TRU or the vehicle such that the first inlet remains exposed to or in fluidic communication with ambient, to allow the inflow of the ambient air from the atmosphere within the device and further direct the ambient air towards the engine via the first outlet.

Optionally, an interior of the device is configured to restrict flow of liquid, entered within the device by the inlet, towards the first inlet or the engine.

Optionally, an interior of the device is configured to separate liquid, from the ambient air, entered within the device along with the ambient air, and further restrict flow of the separated liquid towards the first inlet or the engine.

Optionally, the device comprises a separator wall of a predefined height configured within the housing, wherein the separator wall is configured to restrict flow of the entered liquid toward the first inlet or the engine, while allowing the ambient air to flow, above the separator wall, from the inlet towards the first outlet.

Optionally, a bottom side of the housing has a downward slope of a predefined gradient that enables the device to collect the entered or separated liquid.

Optionally, the bottom side of the housing has any of a substantially V-shape profile or a curved profile.

Optionally, the housing comprises a second outlet at a bottom middle side of the housing, wherein the separator wall is configured over the second outlet such that at least a portion of an opening of the second outlet remains on either side of the separator wall to allow outflow of the liquid being collected on any of the sides of the separator wall within the housing.

Optionally, the housing comprises at least two second outlets at a bottom side of the housing, wherein the separator wall is configured such that the one of the second outlets remains on either side of the separator wall to allow outflow of the liquid being collected on any of the sides of the separator wall within the housing.

Optionally, the second outlet and/or the separator wall are configured at a lower-most point of the downward slope on the bottom side of the housing.

Optionally, the separator wall extends from the lower-most point up to the predefined height within the housing such that a predefined gap remains between a top end of the separator wall and an inner wall of an upper side of the housing.

Optionally, the top end of the separator wall has a curved member with opposite edges of the curved member extending in a downward direction, wherein the curved member is configured to restrict, by a bottom side of the curved member, mixing or interaction of the collected water with the ambient air on either side of the separator wall while the ambient air flows from the inlet towards the first outlet, facilitate separation of the liquid, from the ambient air, flowing along with the ambient air towards the first outlet, direct, by an upper surface of the curved member, the separated liquid towards the bottom side of the housing, and minimize air pressure difference on either side of the separator wall when the ambient air is flowing above the separator wall.

Optionally, an opening of the first outlet remains at least partially above a top-most point or the lower-most point of the bottom side of the housing to restrict flow of the collected liquid toward the first outlet.

Optionally, an internal wall of the housing comprises a plurality of grooves or has a predefined texture to restrict splashing of the entered liquid, facilitates separation of the entered liquid from the ambient air, and/or direct the entered or separated liquid towards the second outlet of the device.

Optionally, an internal wall on a rear side of the housing has a slope that facilitates separation of the entered liquid from the ambient air and further directs the separated liquid towards the second outlet of the device.

Optionally, the device comprises a sealing element configured between the front side of the device and a frame of the TRU or the vehicle where the device is positioned, wherein the sealing element is configured to seal a gap between the device and the air inlet grill and further restrict leakage of the liquid and/or the ambient air through the gap; and one or more mounting elements to facilitate attachment of the device at the predetermined position in the TRU or the vehicle.

Optionally, the air intake device comprises a first conduit fluidically connected to the first outlet and extending towards the engine to direct the ambient air towards the engine, and a second conduit fluidically connected to the second outlet and extending out of the vehicle or into a storage tank to direct the collected liquid out of the vehicle or towards the storage tank.

Optionally, the device is configured within the TRU behind an air intake grill associated with the TRU, such that the air intake grill allows flow of the ambient air within the device via the air intake grill and the inlet of the device, wherein the housing has a predefined shape based on a profile of a portion of the TRU, behind the air intake grill, over which the device is positioned.

According to a second aspect of the invention there is provided a transportation equipment equipped with a transport refrigeration unit (TRU). The transportation equipment comprises an engine, and the air intake device. The device is configured at a predetermined position in the TRU or the transportation equipment, wherein the device is configured to facilitate the inflow of ambient air therewithin and direct the ambient air towards the engine associated with the TRU; and separate liquid, from the ambient air, being entered within the device along with the ambient air, and further collect and restrict flow of the separated liquid towards the first inlet or the engine.

The foregoing summary is illustrative only and is not intended to be in any way limiting. In addition to the illustrative aspects, embodiments, and features described above, further aspects, embodiments, features, and techniques of the subject disclosure will become more apparent from the following description taken in conjunction with the drawings.

The accompanying drawings are included to provide a further understanding of the subject disclosure and are incorporated in and constitute a part of this specification. The drawings illustrate exemplary embodiments of the subject disclosure and, together with the description, serve to explain the principles of the subject disclosure by way of example only.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.

FIG. 1A illustrates an exemplary perspective view of the air intake device.

FIGs. 1B and 1C illustrate exemplary front view and top view respectively of the air intake device.

FIG. 1D illustrates an exemplary exploded view of the air intake device.

FIG. 2 illustrates an exemplary view of the air intake device configured behind an air inlet grill associated with a TRU of a vehicle.

The following is a detailed description of embodiments of the invention depicted in the accompanying drawings. The embodiments are in such detail as to clearly communicate the subject disclosure. However, the amount of detail offered is not intended to limit the anticipated variations of embodiments; on the contrary, the intention is to cover all modifications, equivalents, and alternatives falling within the spirit and scope of the subject disclosure as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, as TRU, inlet, the first outlet, the second outlet, separation wall, and corresponding components, described herein may be oriented in any desired direction.

Engines, widely used in various automotive and industrial applications, are known to produce harmful emissions such as nitrogen oxides (NOx) and soot (particulate matter). These emissions pose serious environmental and health concerns and are subject to stringent regulations worldwide. Reducing NOx and soot emissions is important for meeting emission standards and improving overall air quality.

The temperature of the intake air supplied to the engine may directly impact the formation of NOx and soot. Higher intake air temperatures may be associated with increased NOx emissions and the combustion of particulate matter, which may lead to elevated soot emissions.

In existing vehicles and transport equipment such as trailers, containers, and the like, which draw hot air from the engine compartment, the intake air temperature may be higher than the ambient temperature, exacerbating the emission problem. There is therefore a need for a solution to address the above-mentioned challenges, by providing an air intake device that directs cool ambient air toward the engine of the transport equipment or vehicles while restricting the flow of water or liquid (along with the ambient air) towards the engine.

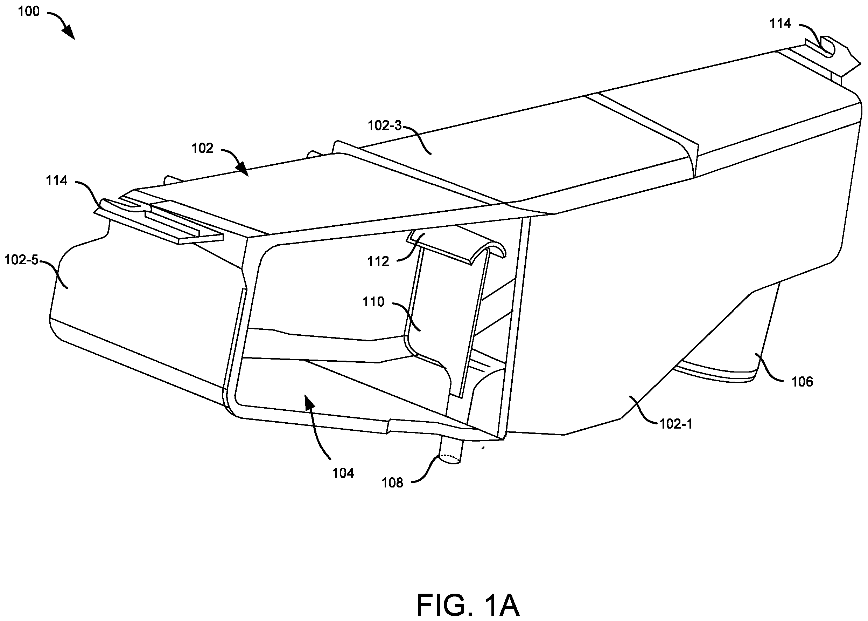

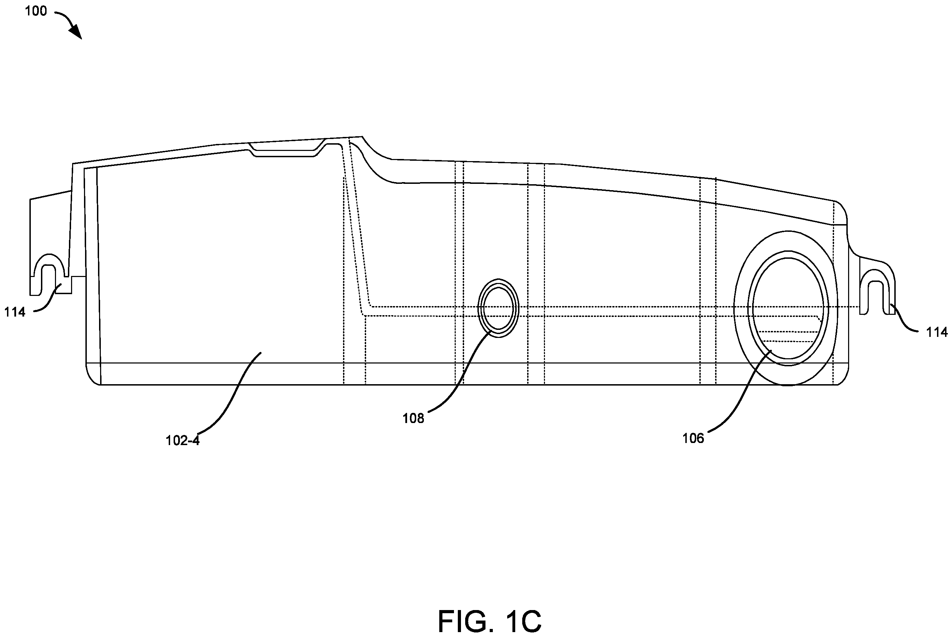

Referring to FIGs. 1A to 1D, the air intake device 100 can include a hollow housing 102 defining the shape of the device 100. The housing can include a front wall 102-1, a rear wall 102-2, a top wall 102-3, a bottom wall 102-4, a left-side wall 102-5, and a right-side wall 102-6 defining the shape of the device 100. The device 100 can be adapted to be fixedly or removably configured at a predetermined position in the vehicle, the TRU, a container or chassis associated with the vehicle, or a trailer associated with the vehicle such that the device 100 can facilitate the inflow of ambient air therewithin and further direct the ambient air towards the engine. The housing 102 of the device 100 can include an inlet 104, a first outlet 106 (also referred to as an air outlet 106, herein), and one or more second outlet(s) (collectively referred to as a second outlet or water outlet 108, herein). In one or more embodiments, the device 100 can be configured with the TRU or the vehicle such that the inlet remains exposed to or in fluidic communication with the ambient, to allow the inflow of the ambient air from the atmosphere within the device 100 and further direct the ambient air towards the engine via the first outlet 106 (air outlet). In addition, the interior of the device 100 can be configured to restrict the flow of liquid (water), entered within the device 100 by the inlet 104, towards the first outlet 106 (air outlet) or the engine. Further, the device 100 can be configured to allow the flow of the liquid, entered within the device 100 by the inlet 104, towards the second outlet 108 (water or liquid outlet) of the device 100 to facilitate the removal of the liquid from the device 100.

In one or more embodiments, the interior of the device 100 can be hollow and configured to separate liquid or water, from the ambient air, entered within the device 100 along with the ambient air, and further restrict the flow of the separated water toward the first outlet 106 or the engine. In one or more embodiments, the internal walls (rear wall 102-2, and/or walls adjacent to the inlet 104) of the housing 102 can include a plurality of grooves (not shown) or can have a predefined texture (not shown) to restrict splashing of the entered liquid, facilitate separation of the entered liquid from the ambient air, and/or further direct the entered or separated liquid toward the second outlet 108 (water outlet) of the device 100. In addition, in one or more embodiments, the internal walls including but not limited to the rear wall, and/or walls adjacent to the inlet 104 of the housing 102 can have a slope that can facilitate the separation of the entered liquid from the ambient air and further direct the separated liquid towards the second outlet 108 (water outlet) or bottom of the device 100.

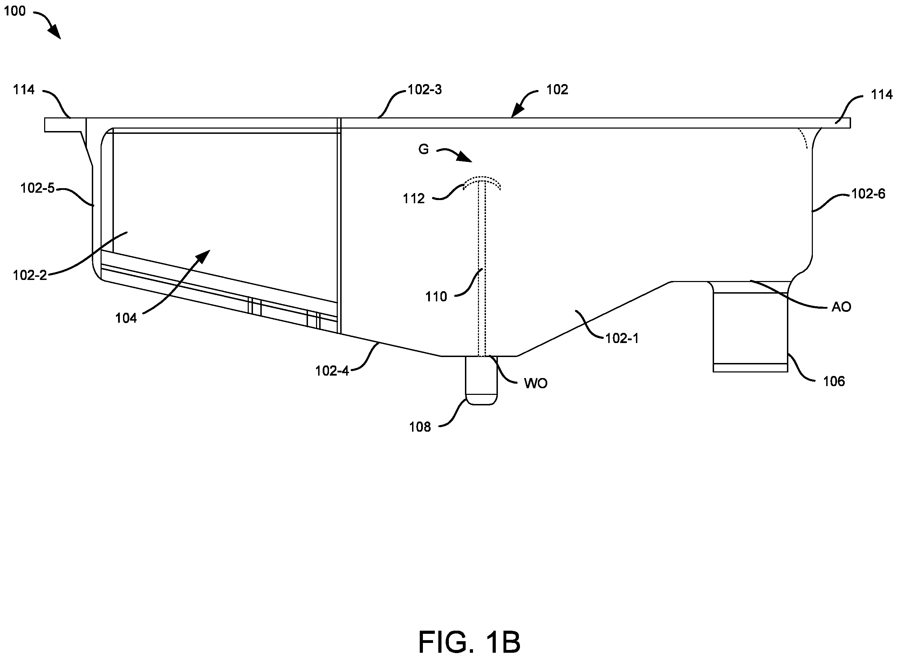

In one or more embodiments, the inlet 104 of the device 100 can be at the front of the housing 102, however, the inlet 104 can also be at any of the lateral side walls 102-5, 102-6 of the device 100, the rear wall 102-2, the top wall 102-3, or the bottom wall 102-4 of the device 100, depending on the device's orientation and installation position, as long as the inlet 104 remains exposed to or in fluidic communication with ambient. In addition, in one or more embodiments, the device 100 can also include more than one inlet 104 at any of the sides or wall of the device 100 based on the device's orientation and installation position, and all such embodiments are well within the scope of the subject disclosure. Referring to FIG. 1A and 1B, the inlet 104 can be provided at a portion on the front wall 102-1 of the housing 102, where remaining portion of the front wall 102-1 remains closed, however, the front wall 102-1 may also be completely removed to form the inlet 104.

In one or more embodiments, the first outlet 106 (air outlet) of the device 100 can be at any of the lateral walls 102-5, 102-6 of the device 100, the rear wall 102-2, the top wall 102-3, or the bottom wall 102-4 of the device 100, depending on the device 100 orientation and installation position, as long as an opening (OA) of the first outlet 106 (air outlet) remains above the opening (WO) of the second outlet 108 (water outlet) of the device 100 so that the flow of liquid, entered or collected within the device 100, is restricted towards the first outlet 106 or the engine.

In one or more embodiments, the device 100 can include a separator wall 110 of a predefined height configured within the housing 102, extending between the front wall 102-1 and rear wall 102-2 of the device 100. The separator wall 110 can extend from the bottom inner wall 102-4 of the housing 102 up to the predefined height within the housing 102 such that a predefined gap (G) remains between the top end of the separator wall 110 and the top (upper) wall 102-3 of the housing 102 to allow the flow of ambient air from the inlet 104 towards the first outlet 106 (air outlet). The separator wall 110 can be configured to restrict the flow of the entered liquid towards the first outlet 106 or the engine, while allowing the ambient air to flow, above the separator wall 110, from the inlet 104 towards the first outlet 106.

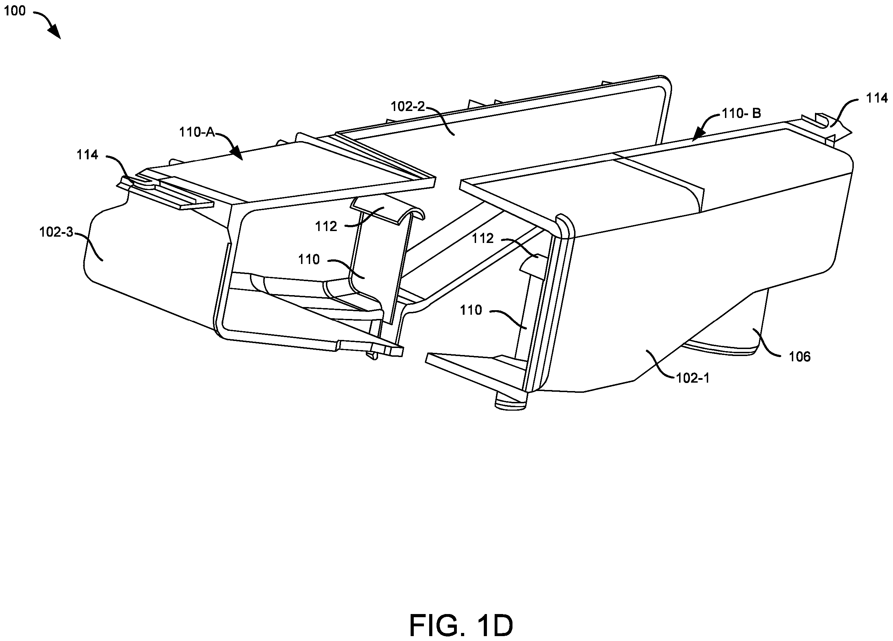

In one or more embodiments, the housing 102 of the device 100 can include one or more sections 102-A, 102-B configured to be removably or fixedly attached to each other to form the housing 102. For instance, as shown in FIG. 1D, the housing 102 can include a first section 102-A and a second section 102-B, where a portion of the first outlet 106, the second outlet 108, the separator wall 110, and/or the curved member 112 may be part of any or both the sections 102-A, 102-B. The sections 102-A, 102-B of the housing 102 can be separately fabricated or manufactured and further attached to form the housing 102. However, the housing 102 can also be made as a single unit using injection moulding and techniques known in the art.

In one or more embodiments, a bottom side or wall 102-4 of the housing 102 can have a downward slope of a predefined gradient that can enable the device 100 to collect the entered or separated liquid at the bottom, while restricting the flow of the collected water towards the first outlet 106 (air outlet 106). In one or more embodiments, the bottom wall 102-4 of the housing 102 can have any of a substantially V-shape profile or a curved profile but is not limited to the like.

In one or more embodiments, the second outlet 108 and/or the separator wall 110 can preferably be configured at a lower-most point (WO) of the downward slope on the bottom side of the housing 102, however, the second outlet 108 and/or the separator wall 110 can also be at any other position within the housing 102 without any limitation. Further, the separator wall 110 can extend from the lower-most point up (WO) to the predefined height within the housing 102 such that a predefined gap (G) remains between the top end of the separator wall 110 and the top wall 102-3 of the housing 102.

In one or more embodiments, the second outlet 108 (water outlet 108) can be at the bottom middle side of the housing 102. In addition, the opening (OA) of the first outlet 106 can remain at least partially above the top-most point or the lower-most point (WO) of the bottom side of the housing 102 to restrict the flow of the collected liquid toward the first outlet 106 (air outlet 106).

In one or more embodiments, the separator wall 110 can be configured over the second outlet 108 such that at least a portion of an opening (WO) of the second outlet 108 remains on either side of the separator wall 110 to allow outflow of the liquid being collected on any of the sides of the separator wall 110 within the housing 102. However, in some embodiments (not shown), the housing 102 can include at least two second outlets at the bottom side of the housing 102, where the separator wall 110 can be configured within the housing 102 such that one of the second outlets remains on either side of the separator wall 110 to allow outflow of the liquid being collected on any of the sides of the separator wall 110 within the housing 102.

In one or more embodiments, the top end of the separator wall 110 can have a curved profile. The separator wall 110 can include a curved member 112 at the top end with opposite edges of the curved member 112 extending in a downward direction. The bottom side of the curved member 112 can restrict the mixing or re-interaction of the collected water with the ambient air on either side of the separator wall 110 while the ambient air flows from the inlet 104 towards the first outlet 106. In addition, the curved member 112 can facilitate separation of the liquid, from the ambient air, flowing along with the ambient air towards the first outlet 106 (air outlet 106). Moreover, the downward extending upper surface of the curved member 112 can reduce air drag and further minimize air pressure difference on either side of the separator wall 110 when the ambient air is flowing above the separator wall 110. Further, the downward extending upper surface of the curved member 112 can direct the separated liquid towards the bottom side of the housing 102.

In one or more embodiments, a sealing element (not shown) such as but not limited to a foam seal can be configured between the front side or wall 102-1 of the device 100 and a frame of the TRU or the vehicle where the device 100 is positioned. However, any other sealing material can also be used based on a gap between the front side of the device 100 and the frame. The sealing element can be configured to seal the gap between the device 100 and the air inlet grill and further restrict leakage of the liquid and/or the ambient air through the gap. In addition, the device 100 can further include one or more mounting elements 114 to facilitate attachment of the device 100 at the predetermined position in the TRU or the vehicle.

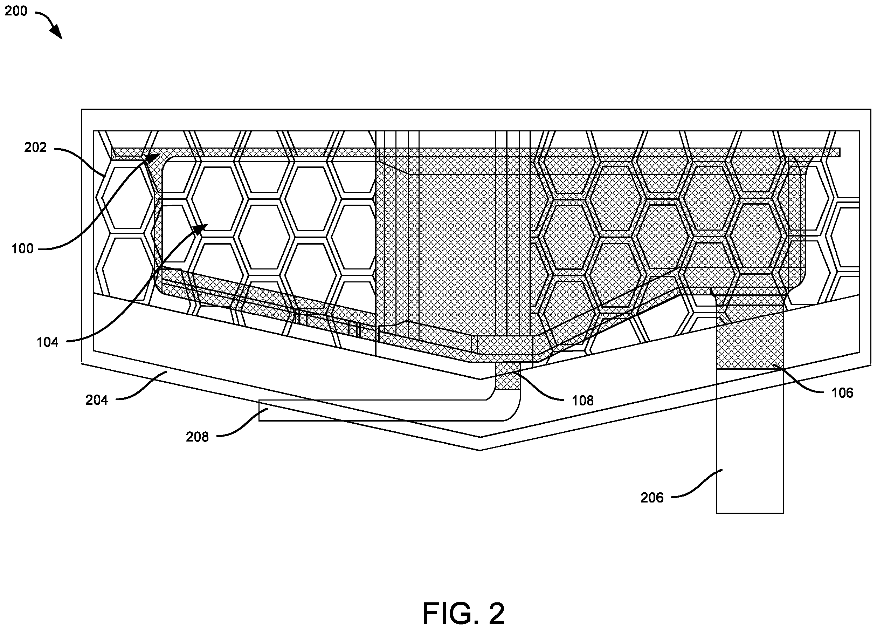

Referring to FIG. 2, in one or more embodiments, the device 100 can be configured within a transport refrigeration unit (TRU) 200 behind an air intake grill 202 associated with the TRU 200, such that the air intake grill 202 can allow the flow of the ambient air within the device 100 via the air intake grill 202 and the inlet 104 of the device 100. The housing 102 can have a predefined shape based on a profile of a portion of a frame 204 of the TRU, behind the air intake grill 202, over which the device 100 is positioned. In addition, the device 100 can include a first conduit 206 (also referred to as air conduit 206, herein) fluidically connected to the first outlet 106 and extending towards the engine to direct the ambient air towards the engine. Further, the device 100 can include a second conduit (also referred to as water discharge conduit 208, herein) fluidically connected to the second outlet 108 and extending out of the vehicle or TRU 200 or into a storage tank to direct the collected liquid out of the vehicle or towards the storage tank or outside.

In addition, a sealing element (not shown) such as but not limited to a foam seal can be configured between the front side or wall the device 100 and the frame 204 of the TRU where the device 100 is positioned. However, any other sealing material can also be used based on a gap between the device 100 and the frame 204 of the TRU. The sealing element can be configured to seal the gap between the device 100 and the air inlet grill 202 and further restrict leakage of the liquid and/or the ambient air. Further, the mounting elements (114 in FIGs. 1A to 1D) of the device 100 can facilitate attachment of the device 100 on the frame 204 of the TRU.

It should be obvious to a person skilled in the art that while various embodiments of this subject disclosure have been elaborated for the device being configured behind the air inlet grill associated with the TRU for the sake of simplicity and better explanation purpose, however, the teachings of this subject disclosure are equally applicable for the device being installed at any position on a vehicle or transportation equipment including but not limited to a truck, a container, a tractor, a trailer, and a chassis as long as the device receives ambient air and direct the ambient air towards the engine associated with the vehicle or transportation equipment, and all such embodiments are well within the scope of this subject disclosure.

In one or more embodiments (not shown), the device 100 can be configured on or within a container, a tractor, a trailer, or a chassis associated with transportation equipment or vehicles, such that the inlet 104 of the device 100 remains in fluidic communication or exposed to ambient atmosphere, to allow the flow of the ambient air within the device 100 via the inlet 104. Further, the first outlet 106 of the device 100 can be connected to a conduit extending up to or towards the engine. This may allow the device 100 to direct cool ambient air toward the engine of the transportation equipment or vehicles while restricting the flow of water toward the first outlet 106 or engine along with the ambient air. In one or more embodiments, the device 100 can be configured on the front of the transportation equipment but is not limited to the like. The device 100 can also be configured on the top, bottom, rear side, left side, and/or right side of the transportation equipment. Further, in some embodiments, more than one device 100 can also be configured with the transportation equipment.

Thus, this invention (air intake device) overcomes the drawbacks, limitations, and shortcomings associated with the engine of vehicles or transportation equipment, by providing an air intake device that can direct cool ambient air toward the engine of the transport equipment or vehicles while restricting the flow of water toward the first outlet or engine along with the ambient air.

While the invention has been described with reference to exemplary embodiments, it will be understood by those skilled in the art that various changes may be made and equivalents may be substituted for elements thereof without departing from the scope of the subject disclosure as defined by the appended claims. Modifications may be made to adopt a particular situation or material to the teachings of the subject disclosure without departing from the scope thereof. Therefore, it is intended that the subject disclosure not be limited to the particular embodiment disclosed, but that the subject disclosure includes all embodiments falling within the scope of the subject disclosure as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. An air intake device (100) for an engine of a vehicle equipped with a transport refrigeration unit (TRU) (200), the device comprising:
a housing (102) defining a shape of the device, the device adapted to be fixedly or removably configured at a predetermined position in the vehicle, the TRU, a container or chassis associated with the vehicle, or a trailer associated with the vehicle such that the device facilitates inflow of ambient air therewithin and directs the ambient air towards the engine.

2. The air intake device of claim 1, wherein the housing comprises an inlet (104) in communication with ambient, a first outlet (106), and an internal cavity enclosed by the housing such that the internal cavity fluidically connects the inlet to the first outlet of the housing.

3. The air intake device of any one of claims 1 and 2, wherein the device is configured with the TRU or the vehicle such that the first inlet remains exposed to or in fluidic communication with ambient, to allow the inflow of the ambient air from the atmosphere within the device and further direct the ambient air towards the engine via the first outlet.

4. The air intake device of any one of claims 1 to 3, wherein an interior of the device is configured to restrict flow of liquid, entered within the device by the inlet, towards the first inlet or the engine,
and/or, wherein an interior of the device is configured to separate liquid, from the ambient air, entered within the device along with the ambient air, and further restrict flow of the separated liquid towards the first inlet or the engine.

5. The air intake device of any one of claims 1 to 4, wherein the device comprises a separator wall (110) of a predefined height configured within the housing, wherein the separator wall is configured to restrict flow of the entered liquid towards the first inlet or the engine, while allowing the ambient air to flow, above the separator wall, from the inlet towards the first outlet.

6. The air intake device of any one of claims 1 to 5, wherein a bottom side (102-4) of the housing has a downward slope of a predefined gradient that enables the device to collect the entered or separated liquid,
optionally, wherein the bottom side of the housing has any of a substantially V-shape profile or a curved profile.

7. The air intake device of any one of claims 1 to 6, wherein the housing comprises a second outlet (108) at a bottom middle side of the housing, wherein the separator wall is configured over the second outlet such that at least a portion of an opening of the second outlet remains on either side of the separator wall to allow outflow of the liquid being collected on any of the sides of the separator wall within the housing,
and/or, wherein the housing comprises at least two second outlets at a bottom side of the housing, wherein the separator wall is configured such that the one of the second outlets remains on either side of the separator wall to allow outflow of the liquid being collected on any of the sides of the separator wall within the housing.

8. The air intake device of any one of claims 1 to 7, wherein the second outlet and/or the separator wall are configured at a lower-most point of the downward slope on the bottom side of the housing,
and/or, wherein the separator wall extends from the lower-most point up to the predefined height within the housing such that a predefined gap remains between a top end of the separator wall and an inner wall of an upper side of the housing.

9. The air intake device of any one of claims 1 to 8, wherein the top end of the separator wall has a curved member (112) with opposite edges of the curved member extending in a downward direction, wherein the curved member is configured to:
restrict, by a bottom side of the curved member, mixing or interaction of the collected water with the ambient air on either side of the separator wall while the ambient air flows from the inlet towards the first outlet;
facilitate separation of the liquid, from the ambient air, flowing along with the ambient air toward the first outlet;
direct, by an upper surface of the curved member, the separated liquid towards the bottom side of the housing; and
minimize air pressure difference on either side of the separator wall when the ambient air is flowing above the separator wall.

10. The air intake device of any one of claims 1 to 9, wherein an opening of the first outlet remains at least partially above a top-most point or the lower-most point of the bottom side of the housing to restrict flow of the collected liquid toward the first outlet.

11. The air intake device of any one of claims 1 to 10, wherein an internal wall of the housing comprises a plurality of grooves or has a predefined texture to restrict splashing of the entered liquid, facilitates separation of the entered liquid from the ambient air, and/or direct the entered or separated liquid towards the second outlet of the device, and/or, wherein an internal wall on a rear side (102-2) of the housing has a slope that facilitates separation of the entered liquid from the ambient air and further directs the separated liquid towards the second outlet of the device.

12. The air intake device of any one of claims 1 to 11, wherein the device comprises:
a sealing element configured between the front side of the device and a frame of the TRU or the vehicle where the device is positioned, wherein the sealing element is configured to seal a gap between the device and the air inlet grill and further restrict leakage of the liquid and/or the ambient air through the gap; and
one or more mounting elements (114) to facilitate attachment of the device at the predetermined position in the TRU or the vehicle.

13. The air intake device of any one of claims 1 to 12, wherein the air intake device comprises:
a first conduit (206) fluidically connected to the first outlet and extending towards the engine to direct the ambient air towards the engine; and
a second conduit (208) fluidically connected to the second outlet and extending out of the vehicle or into a storage tank to direct the collected liquid out of the vehicle or towards the storage tank.

14. The air intake device of any one of claims 1 to 13, wherein the device is configured within the TRU behind an air intake grill (202) associated with the TRU, such that the air intake grill allows flow of the ambient air within the device via the air intake grill and the inlet of the device, wherein the housing has a predefined shape based on a profile of a portion of the TRU, behind the air intake grill, over which the device is positioned.

15. A transportation equipment equipped with a transport refrigeration unit (TRU) (200), the transportation equipment comprising:
an engine; and
an air intake device (100) according to any one of claims 1 to 14, the device configured at a predetermined position in the TRU or the transportation equipment, wherein the device is configured to:
facilitate the inflow of ambient air therewithin and direct the ambient air towards the engine associated with the TRU; and
separate liquid, from the ambient air, being entered within the device along with the ambient air, and further collect and restrict flow of the separated liquid towards the first inlet or the engine.
